# EUROPÄISCHE PATENTSCHRIFT

(11) **EP 1 072 655 B1**
(45) Veröffentlichungstag und Bekanntmachung des Hinweises auf die Patenterteilung: **02.08.2006**
(21) Anmeldenummer: 00111719.1
(22) Anmeldetag: 02.06.2000
(51) Int. Cl.: C09D 17/00, C09D 11/00, C09D 7/12

(54) **Wässrige Russdispersionen**
Aqueous dispersions of carbon black
Dispersions aqueuses de noir de carbone

(30) Priorität: 21.07.1999 DE 19934281
(43) Veröffentlichungstag der Anmeldung: 31.01.2001
(73) Patentinhaber: Degussa AG, 40474 Düsseldorf (DE)
(72) Erfinder: Kalbitz, Werner, 63517 Rodenbach (DE); Alfons, Karl, Dr., 63584 Gründau (DE); Kleinhenz, Horst, Grosskrotzenburg (DE); Johann, Matthias, Dr., 63796 Kahl (DE); Stübbe, Andreas, 63789 Aschaffenburg (DE); Tauber, Gerd, 63500 Seligenstadt (DE)

(56) Entgegenhaltungen:
- EP-A- 0 805 191
- US-A- 4 959 661
- US-A- 5 738 714
- US-A- 5 913 971

## Beschreibung

Die Erfindung betrifft wäßrige kationisch stabilisierte Rußdispersionen, ein Verfahren zu ihrer Herstellung und ihre Verwendung. -

Wäßrige Rußdispersionen werden zur Herstellung von Druckfarben oder auch direkt als Tinten bei zum Beispiel Tintenstrahldruckern (Ink-Jet) eingesetzt.

Das Ink-Jet-Druckverfahren ist eine bekannte Vervielfältigungstechnik, bei der die Druckfarbe drucklos, also ohne Kontakt des Druckkopfes mit dem Druckmedium, übertragen wird. Dabei werden Tintentropfen aus einer Düse auf ein Empfangsmaterial gespritzt, wobei deren Ablenkung elektronisch steuerbar ist. Diese Technik, auch als druckloses Drucken bezeichnet, eignet sich insbesondere zum Bedrucken von Produkten mit unregelmäßigen Oberflächen und Verpackungen, weil zwischen Druckkopf und Bedruckstoff ein gewisser Abstand besteht. Das Druckverfahren ist sehr flexibel und relativ preiswert und wird deshalb auch im Computerdruck, etwa als Arbeitsplatzdrucker, verwendet. Zunehmend kommt das Ink-Jet-Verfahren auch im industriellen Bereich, etwa in der Außenwerbung, zur Anwendung. In der Außenwerbung muß die Tinte besondere Anforderungen an Lichtechtheit und Wasserbeständigkeit erfüllen. Darüber hinaus müssen die Farbbestandteile sehr feinteilig sein, damit die Druckdüsen nicht verstopfen. Als farbgebende Substanzen werden sowohl Farbstoffe wie in jüngerer Zeit auch Pigmente verwendet. Letztere haben den Vorteil gegenüber Farbstoffen, daß die Lichtechtheit sehr hoch ist und daß sie wasserbeständig sind. Pigmente haben einen Nachteil gegenüber Farbstoffen, der darin besteht, daß sie nur durch eine Behandlung mit oberflächenaktiven Substanzen (Tensiden) stabile Dispersionen mit hoher Lagerbeständigkeit bilden. Pigmentteilchen liegen nicht in der Form von Primärteilchen vor sondern in der Form von Aggregaten. Pigmentaggregate sind größer als lösliche Farbstoffe. Sind Pigmentaggregate nicht ausreichend fein dispergiert, verstopfen sie die Düsen des Druckkopfes. Große Aggregate verändern außerdem die Lichtabsorptionseigenschaften des Pigmentrußes. Eine Vergräulichung der Drucke und ein Verlust an Deckkraft ist die Folge.

Erste Patente, die die Verwendung von Pigmentrußen in Ink-Jet-Tinten behandeln, sind die Schriften US-A 5,085,698 und US-A 5,320 668. Darin wird die Verwendung von wasserlöslichen Acrylaten zur Pigmentstabilisierung beschrieben.

Es ist bekannt, wäßrige Rußdispersionen mit Rußen, deren mittlere Primärteilchengröße nicht größer als 30 nm und deren DBP-Zahl mindestens 75 ml/100 g beträgt, herzustellen (US-A 5,538,548).

Es ist weiterhin bekannt, wäßrige Rußdispersionen unter Verwendung von wasserlöslichen organischen Lösungsmitteln und wasserlöslichen Acrylharzen herzustellen (US-A 5,609,671) .

Aus US 4,959,661 sind Ink Jet Tinten bekannt, enthaltend Ruß und anionisches, kationisches oder nicht-ionisches Netzmittel.

Als kationische Netzmittel werden Duoquad T-50, Emcol CC-36, Emcol CC-9 oder Cyastat SP genannt.

Ferner sind aus US 5,738,714 Aufzeichnungsflüssigkeiten bekannt, enthaltend Ruß, Netzmittel und Wasser.

Als Netzmittel können anionische, nicht-ionische, kationische, ampholytische oder polymere Netzmittel eingesetzt werden.

Ein Nachteil der bekannten wäßrigen Rußdispersionen ist das Verlaufen, das sogenannte Ausbluten, nach dem Aufspritzen auf den Träger. Marktübliche Dispersionen haben Zetapotentiale < 0 mV. Durch positive Oberflächenladung der dispergierten Partikel (Zetapotentiale > 0 mV) kann leicht eine gezielte Flockulation der Dispersion während bzw. nach dem Aufbringen auf den Träger erreicht und somit einem Ausbluten entgegengewirkt werden.

Es besteht somit die Aufgabe, Rußdispersionen, die diesen Nachteil des Ausblutens nicht aufweisen und zudem lagerstabil sind, herzustellen.

Gegenstand der Erfindung sind wäßrige Rußdispersionen, welche bezogen auf die gesamte Dispersion neben Wasser die folgenden Komponenten enthalten:

| | |
|---|---|
| Ruß Gew.-%, und | 1 bis 45 Gew.-%, vorzugsweise 5 bis 25 |
| kationisches Tensid Gew.-%, | 1 bis 40 Gew.-%, vorzugsweise 5 bis 25 |

wobei das kationische Tensid der folgenden Formel entspricht: 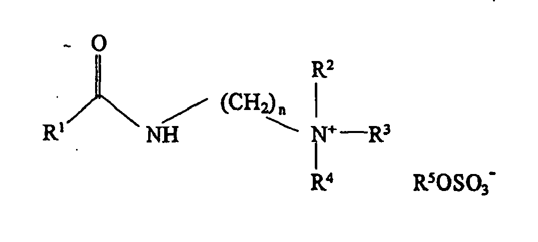 R¹-COOH: Ricinolsäure
R², R³, R⁴: gleich oder verschieden sein können und aus Alkylgruppen C₁ bis C₅ oder 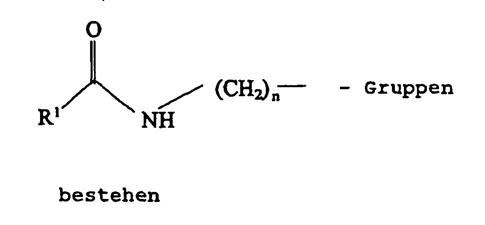 R⁵: Alkylgruppen C₁ bis C₅
n: natürliche Zahl 1 -5 .

In einer Ausführungsform kann das kationische Tensid eine Netzmittelkombination oder Gemisch aus mindestens zwei kationischen Netzmitteln sein.

Als Ruß können Pigmentruße mit einer mittleren Primärteilchengröße von 8 bis 80 nm, vorzugsweise 10 bis 35 nm und einer DBP-Zahl von 40 bis 200 ml/100g, vorzugsweise 60 bis 150 ml/100g eingesetzt werden. Als Ruße können Pigmentruße, die mittels Furnace-, Gasruß-, Channel- oder Flammrußverfahren hergestellt werden, eingesetzt werden. Beispiele hierfür sind Farbruß FW 200, Farbruß FW 2, Farbruß FW 2 V, Farbruß FW 1, Farbruß FW 18, Farbruß S 170, Farbruß S 160, Spezialruß 6, Spezialruß 5, Spezialruß 4, Spezialruß 4A, Printex 150 T, Printex U, Printex V, Printex 140 U, Printex 140 V, Printex 95, Printex 90, Printex 85, Printex 80, Printex 75, Printex 55, Printex 45, Printex 40, Printex P, Printex 60, Printex XE 2, Printex L 6, Printex L, Printex 300, Printex 30, Printex 3, Printex 35, Printex 25, Printex 200, Printex A, Printex G, Spezialruß 550, Spezialruß 350, Spezialruß 250, Spezialruß 100 der Firma Degussa-Hüls AG. In einer bevorzugten Ausführungsform der Erfindung können Gasruße eingesetzt werden.

Der in der Dispersion dispergierte Ruß kann in einer Ausführungsform der Erfindung eine mittlere Teilchengröße von 50 bis 250 nm aufweisen.

Ein weiterer Gegenstand der Erfindung ist ein Verfahren zur Herstellung der wäßrigen Rußdispersion, welches dadurch gekennzeichnet ist, daß man Ruß gemeinsam mit dem oder den Netzmitteln in Wasser dispergiert und gegebenenfalls für die Dispergierung Perlmühlen, Ultraschall-Geräte oder ein Ultra-Turrax verwendet. Im Anschluß an die Dispergierung kann die Rußdispersion zentrifugiert oder gefiltert werden.

Der pH-Wert der Dispersionen kann im sauren Bereich, vorzugsweise im Bereich von 1 - 4, liegen.

Die erfindungsgemäßen Dispersionen weisen eine sehr hohe Flockulationsstabilität im sauren pH-Wert und damit eine hohe Lagerstabilität auf.

Die erfindungsgemäßen Rußdispersionen weisen eine normale optische Dichte auf.

Die erfindungsgemäßen wäßrigen Rußdispersionen können zur Herstellung von Tinten, Lacken und Druckfarben, insbesondere Tinten für Tintenstrahldrucker verwendet werden.

### Beispiele

Die erfindungsgemäßen Rußdispersionen werden wie folgt hergestellt:

### 1. Vorbereitung der Netzmittellösung

Wasser vorlegen und Rewoquat RTM 50 einrühren.

### 2. Einarbeiten des Rußes

Ruß in vorbereitete Netzmittellösung unter langsamem Rühren (entweder von Hand oder mit langsamem Rührwerk) nach und nach einarbeiten.

### 3. Dispergierung

Ultraschall-Geräte

Die in Punkt 2 vorbereitete Dispersion wird mit einem Hochleistungsmischer (zum Beispiel Ultra-Turrax) homogenisiert und mit dem Ultraschall-Gerät dispergiert. In der Zentrifuge können sehr grobe Teilchen von der so erhaltenen Dispersion abgetrennt werden.

Die Zusammensetzung der wäßrigen Rußdispersionen sowie ihre Eigenschaften sind in der Tabelle 1 dargestellt. Aus der Tabelle 1 kann weiterhin ersehen werden, daß die erfindungsgemäßen wäßrigen Rußdispersionen eine gute Laberstabilität aufweisen.

**Tabelle 1**

| **Beispiel Nr. Dispergierung: Ultraschall** | **1** | **2** |
|---|---|---|
| **Inhaltsstoffe** | | |
| Printex 90 | 15 | - |
| Farbruß FW 18 | | 15 |
| Rewoquat RTM 50 | 12 | 12 |
| Wasser | 73 | 73 |
| Gesamt | 100 | 100 |
| Oberflächenspannung mN/m | 38,2 | 37,7 |
| mittlere Teilchengröße nm | 101 | 125 |
| opt. Dichte (5% Ruß / 15% TEG) | 1,46 | 1,49 |
| My | 148 | 152 |
| Mc | 145 | 151 |
| Zetapotential mV | +32 | +30 |
| pH-Wert | 2,7 | 2,3 |
| Stabilität | | |
| Viskosität, 1 Tag mPa.s (cPs) | 25 | 25 |
| Viskosität, 28 Tage mPa.s (cPs) | 84 | 34 |

Die Oberflächenspannung wird mit der Plattenmethode nach DIN 53 914 (3/80) bei 20 °C bestimmt. Die Oberflächenspannung der Rußdispersion ist in sofern von Bedeutung als eine hohe Oberflächenspannung die Bildung von Tröpfchen, welche die Düse beim Inkjet-Verfahren verlassen, positiv beeinflußt.

Das Zetapotential wird mit einem MBS-8000 der Firma Matec bestimmt. Die Proben werden unverdünnt gemessen. Das Zetapotential wird mittels der elektrokinetischen Schallamplitude (ESA) bestimmt. Das Zetapotential, das den Ladungszustand der Teilchenoberfläche charakterisiert, gibt einen Hinweis auf das für die Stabilisierung verwendete Netzmittel. Bei kationischen Netzmitteln ist das Zetapotential größer 0 mV, vorzugsweise größer / gleich 10 mV. Bei nichtionischen Netzmitteln liegt das Zetapotential üblicherweise bei ≤ 0 mV.

Die Teilchengrößenverteilung wird mittels der dynamischen Lichtstreuung (Photonenkorrelationsspektroskopie, PCS) ermittelt. Als Gerät wird ein Photonenkorrelationsspektrometer Nicomp N370 (Fa. Hiac/Royco) verwendet. Die Messung erfolgt in Reinstwasser. Die Auswertung erfolgt mit der Gauß-Verteilungsanalyse (Volumenverteilung).

Die optische Dichte wird mit Mcbeth RD 918 Densitometer an Prüfdrucken, hergestellt auf einem Hewlett Packard Drucker 660 C, bestimmt.

Der pH-Wert wird direkt in der Rußdispersion mit einer handelsüblichen Meßelektrode bestimmt.

Der Stabilitätstest wird wie folgt durchgeführt:

Die Dispersion wird 28 Tage bei Raumtemperatur gelagert, danach bis -30 °C eingefroren und auf 70 °C aufgeheizt.

Die Beispiele 1 und 2 zeigen eine hohe Flockulationsstabilität und damit eine hohe Lagerstabilität, ersichtlich an dem geringen Viskositätsanstieg über 28 Tage (Raumtemperatur) und dem hohen Zetapotential. Die Farbwerte liegen im normalen Bereich. Die Teilchengrößen in der Dispersion sind auf Aggregatgrößenniveau und sind somit ein Hinweis für eine gute Dispersionsstabilität durch das kationische Neztmittel.

Die Viskostitätsmessungen werden mit einem Brookfield Modell DV-II durchgeführt.

Die bei der Herstellung der Rußdispersionen verwendeten Komponenten sind wie folgt charakterisiert:

Der Ruß Printex 90 ist ein Furnaceruß mit einer mittleren Primärteilchengröße von 14 nm und einer DBP-Adsorption von 95 ml/100 g.

Der Farbruß FW 18 ist ein Gasruß mit einer mittleren Primärteilchengröße von 15 nm.

Rewoquat RTM 50 ist ein kationisches Netzmittel.
Hersteller: Witco
Stoffgruppe: Ricinolsäure propylamido trimethylammonium methosulfat

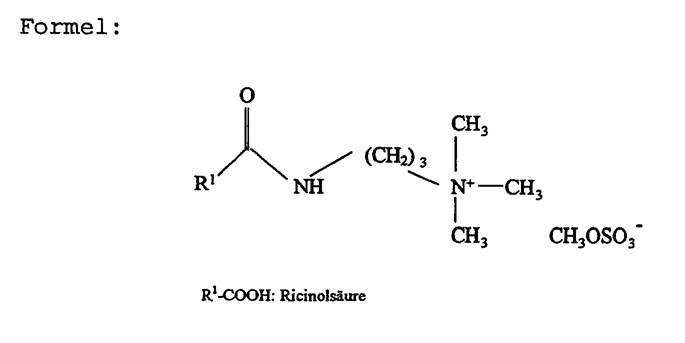

## Patentansprüche

1. Wäßrige Rußdispersionen , enthaltend bezogen auf die gesamte Dispersion neben Wasser die folgenden Komponenten:
| | |
|---|---|
| Ruß | 1 bis 45 Gew.-%, und |
| kationisches Tensid | 1 bis 40 Gew.-%, |
wobei das kationische Tensid der folgenden Formel entspricht: 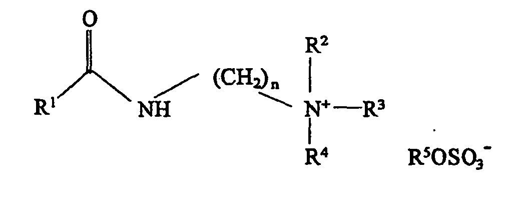 R¹-COOH: Ricinolsäure
R², R³, R⁴: gleich oder verschieden sein können und aus Alkylgruppen C₁ bis C₅ oder 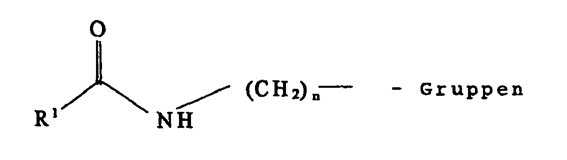 bestehen
R⁵: Alkylgruppen C₁ bis C₅
n: natürliche Zahl 1-5.

2. Wäßrige Rußdispersion nach Anspruch 1, **dadurch gekennzeichnet, daß** der Ruß ein Pigmentruß mit einer mittleren Primärteilchengröße von 8 bis 80 nm und einer DBP-Zahl von 40 bis 200 ml/100g ist.

3. Wäßrige Rußdispersion nach Anspruch 1 bis 2, **dadurch gekennzeichnet, daß** der in der Dispersion dispergierte Ruß eine mittlere Teilchengröße von 50 bis 250 nm hat.

4. Wäßrige Rußdispersion nach Anspruch 1, **dadurch gekennzeichnet, daß** der Ruß in einer Menge von 5 bis 25 Gew.-% bezogen auf die gesamte Dispersion, enthalten ist.

5. Wäßrige Rußdispersion nach Anspruch 1, **dadurch gekennzeichnet, daß** das kationische Tensid in einer Menge von 5 bis 25 Gew.-% bezogen auf die gesamte Dispersion, enthalten ist.

6. Wäßrige Rußdispersion nach Anspruch 1, **dadurch gekennzeichnet, daß** das kationische Tensid eine Netzmittelkombination oder Gemisch aus mindestens zwei kationischen Netzmitteln ist.

7. Verfahren zur Herstellung der wäßrigen Rußdispersion nach Anspruch 1 bis 6, **dadurch gekennzeichnet, daß** man Ruß gemeinsam mit dem oder den Netzmitteln in Wasser dispergiert und gegebenenfalls für die Dispergierung Perlmühlen, Ultraschall-Geräte oder ein Ultra-Turrax verwendet.

8. Verfahren zur Herstellung der wäßrigen Rußdispersion nach Anspruch 7, **dadurch gekennzeichnet, daß** die wäßrige Rußdispersionen im Anschluß an die Dispergierung zentrifugiert oder gefiltert wird.

9. Verwendung der wäßrigen Rußdispersion nach Anspruch 1 bis 6, zur Herstellung von Tinten, Lacken und Druckfarben.

10. Verwendung der wäßrigen Rußdispersion nach Anspruch 9, zur Herstellung von Tinten für Tintenstrahldrucker.

## Claims

1. Aqueous carbon black dispersions comprising water, 1 to 45% by weight carbon black, relative to total dispersion weight, and 1 to 40% by weight cationic surfactant, relative to total dispersion weight, wherein the cationic surfactant conforms to the following formula: 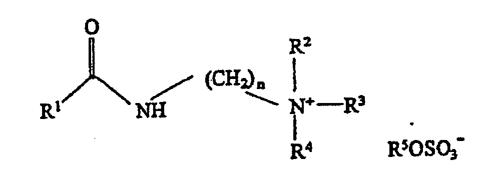 wherein R¹-COOH represents ricinoleic acid; R², R³, R⁴ may be identical or different substituents and are selected from the group consisting of C₁ to C₅ alkyl groups and 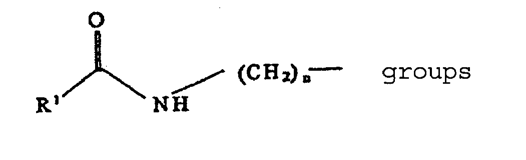 R⁵ represents C₁ to C₅ alkyl groups; and n represents a natural number 1-5.

2. Aqueous carbon black dispersion according to Claim 1, **characterized in that** the carbon black comprises a pigment black with an average primary particle size of 8 to 80 nm and a DBP No. of 40 to 200 ml/100 g.

3. Aqueous carbon black dispersion according to Claim 1 and 2, **characterized in that** the carbon black dispersed in the aqueous carbon black dispersion has an average particle size of 50 to 250 nm.

4. Aqueous carbon black disersion according to Claim 1, **characterized in that** the carbon black is present in an amount of 5 to 25% by weight relative to the total dispersion weight.

5. Aqueous carbon black dispersion according to Claim 1, **characterized in that** the cationic surfactant is present in an amount of 5 to 25% by weight relative to total dispersion weight.

6. Aqueous carbon black dispersion according to Claim 1, **characterized in that** the cationic surfactant comprises a wetting agent combination or a mixture of at least two cationic wetting agents.

7. Method of producing an aqueous carbon black dispersion according to Claim 1, comprising: dispersing the carbon black and the wetting agent or agents in water using, optionally, a member selected from the group consisting of bead mills, ultrasonic devices and an Ultra Turrax mixer.

8. Method of producing the aqueous carbon black dispersion according to Claim 7, **characterized in that** the aqueous carbon black dispersion is centrifuged or filtered following the dispersing step.

9. Use of the aqueous carbon black dispersion according to Claim 1 for preparing inks, lacquers and printing inks.

10. Use of the aqueous carbon black dispersion according to Claim 9 for preparing inks for inkjet printers.

## Revendications

1. Dispersions aqueuses de noir de fumée, contenant, par rapport à la dispersion totale, outre l'eau, les composants suivants :
| | |
|---|---|
| noir de fumée agent tensioactif | 1 à 45% en poids et |
| cationique | 1 à 40% en poids, |
l'agent tensioactif cationique correspondant à la formule suivante 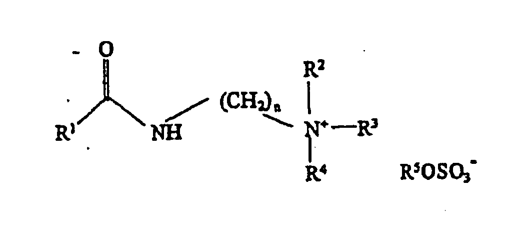 où :
R¹-COOH : acide ricinoléique
R², R³, R⁴: peuvent être identiques ou différents et se composent de groupements alkyles C₁ à C₅ ou de groupements 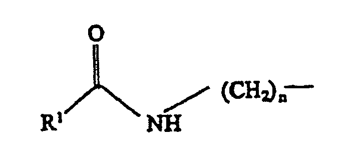
R⁵ : groupements alkyles C₁ à C₅
N : nombre naturel 1 - 5.

2. Dispersion aqueuse de noir de fumée selon la revendication 1, **caractérisée en ce que** le noir de fumée est un noir de fumée pigmentaire ayant une granulométrie primaire de 8 à 80 nm et un indice DBP de 40 à 200 ml/100 g.

3. Dispersion aqueuse de noir de fumée selon la revendication 1 ou 2, **caractérisée en ce que** le noir de fumée dispersé dans la dispersion possède une granulométrie moyenne de 50 à 250 nm.

4. Dispersion aqueuse de noir de fumée selon la revendication 1, **caractérisée en ce que** le noir de fumée est contenu dans une quantité de 5 à 25% en poids par rapport à la dispersion globale.

5. Dispersion aqueuse de noir de fumée selon la revendication 1, **caractérisée en ce que** l'agent tensioactif cationique est contenu dans une quantité de 5 à 25% en poids par rapport à la dispersion globale.

6. Dispersion aqueuse de noir de fumée selon la revendication 1, **caractérisée en ce que** l'agent tensioactif cationique est une combinaison d'agents mouillants ou un mélange d'au moins deux agents mouillants cationiques.

7. Procédé en vue de la fabrication de la dispersion aqueuse de noir de fumée selon la revendication 1 à 6, **caractérisé en ce que** l'on procède à la dispersion dans l'eau du noir de fumée, conjointement à l'agent mouillant ou aux agents mouillants, et **en ce que** l'on utilise pour la procédure de mise en dispersion, le cas échéant, des moulins à perles, des appareils aux ultrasons ou un dispositif Ultra-Turrax.

8. Procédé en vue de la fabrication de la dispersion aqueuse de noir de fumée selon la revendication 7, **caractérisé en ce que** les dispersions aqueuses de noir de fumée sont centrifugées ou filtrées à la suite de la procédure de mise en dispersion.

9. Utilisation de la dispersion aqueuse de noir de fumée selon la revendication 1 à 6, en vue de la fabrication d'encres, de laques et d'encres d'imprimerie.

10. Utilisation de la dispersion aqueuse de noir de fumée selon la revendication 9, en vue de la fabrication d'encres destinées aux imprimantes à jet d'encre.
